# EUROPEAN PATENT SPECIFICATION

(11) **EP 4 584 839 B1**
(45) Date of publication and mention of the grant of the patent: **04.11.2026**
(21) Application number: 23772309.3
(22) Date of filing: 05.09.2023
(51) Int. Cl.: H01M 10/42, H01M 10/48, H01M 50/204, H01M 50/249, H01M 50/258, H01M 50/269, H01M 50/298, H01M 50/507, H01M 50/509

(54) **BATTERY ASSEMBLY OF BATTERY MODULES**
BATTERIEANORDNUNG VON BATTERIEMODULEN
ENSEMBLE BATTERIE DE MODULES DE BATTERIE

(30) Priority: 05.09.2022 GB 202212924
(43) Date of publication of application: 16.07.2025
(73) Proprietor: Fortescue Zero Limited, Kidlington Oxfordshire OX5 1GB (GB)
(72) Inventor: JONES, Joe, Wantage Oxfordshire OX12 0QD (GB); DOWSON, Shaun, Wantage Oxfordshire OX12 0QD (GB); DEW, Samuel, Wantage Oxfordshire OX12 0QD (GB); CORRIDI, Davide, Wantage Oxfordshire OX12 0QD (GB); THOMAS, Hannah, Wantage Oxfordshire OX12 0QD (GB)
(74) Representative: Boult Wade Tennant LLP
(86) International application number: PCT/GB2023/052287
(87) International publication number: WO 2024/052658

(56) References cited:
- WO-A1-2021/074568
- US-A1- 2016 134 106

## Description

The present disclosure relates to batteries, and in particular to a battery assembly comprising a chain of at least a primary battery module and a secondary module.

### Introduction

Batteries comprising multiple battery modules, each comprising a large number of separate battery cells, have become a conventional way of providing motive power in road vehicles, boats, small aircraft and other modes of transportation. The relative flexibility of design using such modules also makes them attractive for use in other areas of application such as domestic and industrial power banks, storage of electrical energy from renewable sources and so forth.

US2016/134106 describes a battery made up of chain assembly of modules. WO2021/074568 discloses a battery pack arranged such that corresponding cell groups of battery modules define a plurality of rows of cell groups each electrically connected aling the row.

It would be desirable to address problems and limitations of the related prior art.

### Summary of the invention

Prior art battery modules tend to be designed with a fixed configuration in terms of voltage (V) and capacity (Ah), limiting the number of battery configurations which can be generated from repeating a single battery module. For example, similar or identical modules may be connected in electrical series, which increases the voltage of the battery as a whole, but does not permit independent control of capacity. Alternatively or additionally, modules may be connected in electrical parallel, which can therefore also increase total electrical capacity of the battery independently of voltage, and therefore provide flexible adjustment of total power (W) and energy (Wh) available from the assembly.

In most higher power and capacity batteries it is important to monitor and provide control of separate parts of the battery. This is frequently implemented on a per-module basis, using a central battery management unit in communication with multiple cell monitoring units. If multiple battery modules are used electrically in parallel to increase battery capacity then implementing an additional cell monitoring unit for each such electrically parallel module adds complexity and expense to each module, and increases the data which has to be delivered to and from and has to be processed by the battery management.

Additionally, existing battery modules are frequently designed to be connected in series only, to increase voltage but without independent control of total capacity. In this case, adding further battery modules electrically in parallel to such a system would necessitate reprogramming or other adaption of the battery management unit, or significantly increasing its data processing capacity.

Embodiments of the invention therefore provide a scalable battery assembly, comprising a primary battery module with a cell monitoring unit, and one or more secondary battery modules, any number of which can be added in electrical parallel with the primary battery module to increase electrical capacity by forming a chain of such battery modules. Separately coupling in electrical parallel corresponding groups of cells in each of the modules then permits the cell monitoring unit of the primary module to effectively sense voltages of, and provide charge balancing and other services to, all of the corresponding groups of cells across the chain without adding undue electrical complexity or requiring further data processing capability. A battery with chosen capacity and voltage can then be constructed by combining any number of such scalable battery assemblies in series.

In particular, the invention provides a battery assembly as set out in claim 1. In this arrangement, the detected voltage of each of the plurality of groups of battery cells of the primary battery module may generally be at least a voltage between each adjacent group in the series, and optionally also at each end of the series, or equivalently a voltage across each group in the series.

In particular, preferably no separate cell monitoring unit is provided at or for any or each of the secondary battery modules, which are instead sensed together with the primary battery module as part of the battery module chain. Instead, the cell monitoring unit associated with the primary battery module is effectively shared with the other, secondary, battery modules of the chain.

Such a battery assembly can be extended to any reasonable length of chain comprising the primary battery module, the secondary battery module, and one or more further secondary battery modules which may be essentially the same as or identical to the first secondary module, and are connected to form the chain by further similar or identical electrical interconnects. Note that although a chain of battery modules may use electrical interconnects such that the modules are disposed in a linear chain, the chain could instead or also contain branches, for example having two secondary battery modules being directly coupled using one or more suitable electrical interconnects to the same side of single primary battery module.

In particular each further secondary battery module may also comprise a secondary casing or housing within which a plurality of groups of battery cells are housed and electrically connected in series, each group comprising a plurality of battery cells electrically connected in parallel, each further secondary battery module may be electrically connected to a previous secondary battery module of the chain by a further electrical interconnect, arranged such that each of the plurality of groups of battery cells of the further secondary battery module is electrically connected in parallel with a corresponding one of the plurality of groups of battery cells of the previous secondary battery module, such that the voltages detected by the cell monitoring unit of the primary battery module are also voltages of each of the plurality of groups of battery cells of the further secondary battery module.

Typically, the cell monitoring unit may be mounted to an exterior or interior of the primary casing, and may comprise one or more circuit boards carrying one or more integrated circuits and other circuitry arranged to implement the required cell monitoring functions and typically also data communications with a separate battery management unit arranged to manage both this and other battery assemblies of the battery. However, the cell monitoring unit could be located remotely from the primary casing if desired, for example being collocated with the battery management unit, or elsewhere.

The casings or housings of the battery modules of the chain may be coupled together in series using one or more mechanical couplings between each pair of adjacent casings in the chain. For example, each of the mechanical couplings may slot into and be retained within parallel slots in the corners of each of the two adjacent casings or housings it is coupling together. If multiple chains of battery modules are disposed adjacent to each other than such mechanical couplings may be similarly used to join the four corners of four adjacent casings or housings forming part of two such chains.

In each of the battery modules, the battery cells of each group of cells may be electrically connected in parallel using one or more busbars, each busbar spanning across the group of cells. Typically, the total number of busbars required will be one more than the number of groups of cells, since the busbars may also function to link the groups of cells in electrical series. In any case, the cell monitoring unit may be electrically connected to the busbars of the first battery module, optionally using an electrical manifold component spanning across the busbars, typically at an end of the casing proximal to the cell monitoring unit.

The electrical interconnect between each pair of adjacent battery modules in the chain may comprise a plurality of busbar links, each busbar link coupling corresponding groups of cells in the adjacent modules, for example by being electrically connected and optionally mechanically coupled or affixed to a busbar of each the pair of adjacent battery modules. The plurality of busbar links between each pair of adjacent battery modules may be comprised within a single, integral interconnect unit.

For delivering electrical power from the battery module to a load (such as a vehicle motor), including in series through other battery modules as required, each battery module may comprise a pair of electrically opposite (i.e. positive and negative) power terminals, typically disposed on opposite sides of the casing of the battery module, and typically disposed on sides of the casing which are perpendicular to the side of the primary casing where the cell monitoring unit is located, and perpendicular to the sides of the casings which abut other casings in the chain. The electrically opposite power terminals of each battery module may staggered from each other along the opposite sides of the casing, so that when multiple chains are connected in series there is more space for the power connections between the modules.

Each battery module may comprise one or more temperature detectors such as thermocouples, typically disposed on or adjacent to one or more cells of the battery module, and the cell monitoring unit of the primary module is then electrically connected to the temperature detectors of all of the battery modules so as to monitor temperature in all of the battery modules.

Embodiments of the invention also provide a battery comprising a plurality of the above battery assemblies, connected in electrical series to provide power output at a voltage which is a multiple of each single module. To this end, the chains of battery modules corresponding to the battery assemblies are typically disposed adjacent to, and typically also physically in parallel, with each other, and the groups of battery cells of each battery assembly are then connected in electrical series with the groups of battery cells of each of the other battery assemblies.

For each adjacent pair of battery assemblies, a power connector is coupled between a power output terminal of each battery module of a first of the pair of battery assemblies and a power output terminal of each corresponding battery module of the second of the pair of battery assemblies, to provide the series electrical connection between the battery assemblies of each pair using multiple power connectors. In this way, output power is transferred directly between corresponding series battery modules, and not across the electrical interconnects along the chains.

Each power output terminal of each battery module may then be disposed at a side of the casing of the battery module, each power connector may connect power output terminals of adjacent (and typically physically parallel) sides of the respective casings, and the pair of power output terminals connected by each power connector are staggered with respect to each other along the respective adjacent sides of the respective casings.

In the above batteries, battery assemblies and battery modules, each battery module may one or more of: comprise from 20 to 200 separate battery cells; and have an electrical capacity of from 1 to 20 kWh. Typically each battery module of a battery assembly will have the same number of groups of cells and the same number of cells in each group, as the other battery modules of the battery assembly, and each battery assembly of a battery will have the same number of such battery modules as each other assembly.

Embodiments of the invention also provide a vehicle, such as a road or other wheeled or tracked land vehicle, a boat, or aircraft which comprises at least one battery assembly, or a battery, as described above, wherein the battery assembly or batter is arranged to provide electrical motive power for the vehicle.

Also within the scope of this disclosure are methods of manufacturing, assembling, and operating corresponding to the described apparatus. For example, the invention provides a method as set out in claim 14.

In this way, the cell monitoring unit is a shared cell monitoring unit, shared between the primary and each of the secondary battery modules.

Note that in some embodiments the cell monitoring unit associated with the primary module may be located remotely from the primary module, and/or may be implemented using two or more subunits which may be distinct from each other, for example with each subunit being used to monitor voltages of a different subset of the groups of cells. Note also that although a battery has been indicated above as comprising two or more of the described battery assemblies electrically coupled in series, a complete battery could be implemented using just one such battery assembly.

### Brief summary of the drawings

Embodiments of the invention will now be described, by way of example only, with reference to the accompanying drawings of which:
Figure 1 schematically shows a battery assembly comprising a primary battery module coupled via an electrical interconnect to a secondary battery module, which is coupled to a further secondary battery module through a further electrical interconnect;
Figure 2 schematically shows how two or more battery assembly chains of figure 1 may be disposed physically in parallel and/or adjacent to each other, and electrically connected in series to form a battery of higher output voltage;
Figure 3 shows in plan view how the battery assembly of figure 1 may be implemented in more detail;
Figure 4 is a side elevation view corresponding to figure 3; and
Figure 5 is a perspective exploded view corresponding to figures 3 and 4.

### Detailed description of embodiments

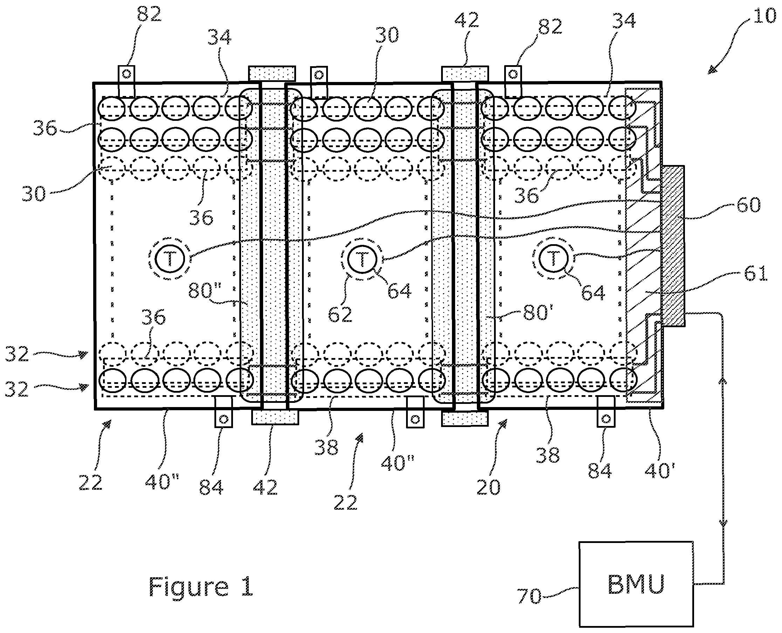

Referring to figure 1 there is illustrated schematically a battery assembly 10 comprising a primary battery module 20, and one or more electrically parallel secondary battery modules 22, such that the battery modules form a chain. Although schematic, the view may be taken to be similar to a view of the battery assembly from above. The one or more secondary battery modules are provided to increase the electrical capacity of the battery assembly 10, in particular to increase the available electrical current, rather than increasing the voltage. If increased voltage is required then multiple such battery assemblies may be provided in series as described further below.

The battery assembly 10, or indeed multiple such battery assemblies electrically connected to form a battery, may be installed or comprised in a vehicle (not shown in the figure), such as a road or other wheeled or tracked land vehicle, a boat, or aircraft, for example being arranged to provide electrical motive power for the vehicle.

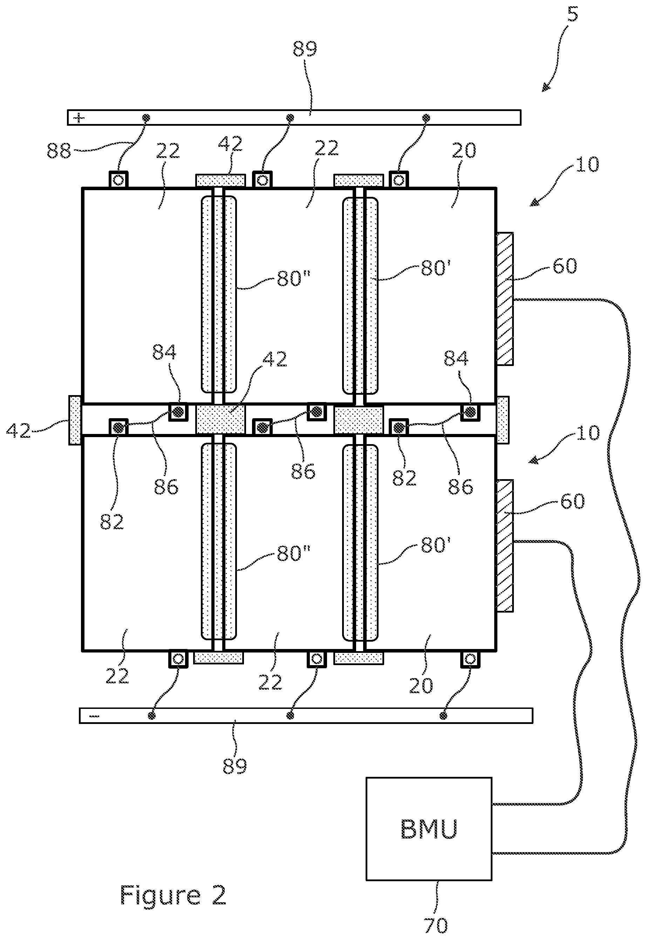

In the figure, two secondary battery modules are shown within the chain, but just one, or more than two may be used in a single such battery assembly 10. Note that although in figures 1 and 2 the primary battery module 20 is indicated as being both physically and electrically at one end of the chain of battery modules, it could instead be at another position in the chain, for example between at least two secondary battery modules. Furthermore, although the chains of battery modules depicted in figures 1 and 2 use electrical interconnects such that the modules are disposed in a linear chain, the chain could instead contain branches such as having two secondary battery modules being directly coupled, using suitable electrical interconnects, to the same side of a single primary battery module.

Each primary and secondary battery module comprises a plurality of battery cells 30 housed in a casing 40. In figure 1 the casing of the primary battery module is labelled 40' and may be referred to as a primary casing, and those of the secondary battery modules are labelled 40" and may be referred to as secondary casings. In figure 1 only five rows of the battery cells are shown, for the purposes of clarity, but of course in practice the rows of battery cells are repeated along the length of each casing.

Typically, each casing may be moulded from a plastics or polymer material, may be approximately cuboid in form, and the individual battery cells may be supported within, and spaced from each other within the casing by a foam material which helps to locate the cells and to provide a thermal barrier which reduces the likelihood of thermal runaway in the battery module 20, 22. Typically the casings 40', 40" of each of the primary and secondary modules may be of substantially the same shape and physical dimensions as each other and may each contain the same number of battery cells in the same electrical configuration.

The casing 40' of the primary battery module may be fixed or directly coupled or mounted to the casing 40" of the adjacent secondary battery module in the chain, using one or more mechanical couplings 42 between the two, and similarly each secondary battery module may be fixed or directly coupled or mounted to a further and adjacent secondary battery module of the chain using similar mechanical couplings 42. A suitable mechanical coupling 42 could be a separate component bolted or otherwise fixed or coupled to each of two adjacent casings, for example a separate mechanical component which slots into and is retained within parallel slots in each of two adjacent casings, for example at both the pairs of adjacent corners of two adjacent casings. Alternatively, a suitable mechanical coupling could be provided by an integral part of one of the casings which is then bolted, engaged within, or otherwise fixed to an adjacent casing in the chain.

Each battery cell 30 has at least a positive and a negative electrical terminal. In figure 1 the battery cells are cylindrical in form with positive and negative terminals accessible at a (typically upper) connection end of each cylinder, and the cells are racked in the casings with the connection ends all facing the same way (typically upwards). However, other cell forms and arrangements within the casings, and orientations of the cells are possible. Suitable cell types may be 21700 cylindrical cells (diameter 21 mm and length 70 mm) such as the Molicel P45B cell, but larger or smaller cells, and cells of different shapes and form such as pouch or prismatic cells could be used. In the arrangement of figure 1 each primary and secondary battery module contains 60 cells in a configuration of 12 rows of 5 cells (not all rows are shown in the figure). Although in figure 1 a square packing arrangement is shown, more usually the rows would be staggered from each other to provide hexagonal packing. Of course other numbers and configurations of battery cells may be used.

The battery cells 30 of each battery module 20, 22 are arranged as a plurality of groups of cells 32, in figure 1 shown as a row of five cells across the casing, each group of cells comprising a plurality of individual cells which are electrically connected in parallel with each other (both at the positive and negative cell terminals). Typically this may be achieved using a plurality of busbars (shown as dashed line boxes) in each battery module 20, 22, each busbar spanning between or across a group of cells and providing a common electrical connection to all of the cells of the group 32. The separate groups of cells 32 of a particular primary or secondary battery module are then connected in series with each other within the module. Although various different configurations are possible to achieve this, in figure 1 a first busbar 34 connects the positive terminals of the cells of a first of the groups of cells, a last busbar 38 connects the negative terminals of the cells of a last of the groups of cells, and a plurality of intermediate busbars 36 are provided each of which connects the negative terminals of one group of cells with the positive terminals of another group of cells. In this way, the groups of cells of a particular battery module are all connected in electrical series with each other.

The primary battery module 20 also comprises a cell monitoring unit 60 which is arranged to detect and/or monitor a voltage of each of the plurality of groups of battery cells within the primary battery module. As shown in figure 1, this may typically be achieved using an electrical connection from the cell monitoring unit 60 to each busbar 34, 36, 38 of the primary battery module, for example using an electrical manifold component 61 which spans or extends across of the busbars, preferably being located both proximally to the cell monitoring unit 60 and to the proximal ends of the busbars.

Note that the cell monitoring unit could monitor and report on a voltage across each group of cells, requiring the same number of measurements as there are groups of cells, or could monitor and report on voltage point between each group of cells and at the two end points of the plurality of groups, requiring one more voltage point than the number of groups of cells, or could monitor and report on the voltages of the groups of the cells in other ways. In any of these arrangements each voltage can be referred to as a voltage of, including a voltage at one end of, a particular group of cells.

The cell monitoring unit 60 may also be arranged to detect and/or monitor the temperature of one or more locations 62 within the primary battery module 20, typically by a thermistor or other temperature detector 64 located each location 62, and using electrical connections between the temperature detectors 64 and the cell monitoring unit 60. The temperature detector(s) 64 may be thermally coupled to or located on or at each of one or more of the cells within the module.

The cell monitoring unit 60 may be mounted to the casing 40' of the primary battery module 20, for example to an exterior or interior of the casing, such as being mounted to the outside or inside of a side wall of the casing 40', or being mounted within an aperture or space within a side wall of the casing or within the casing itself. In some embodiments however, the cell monitoring unit 60 could be located separately or at a distance from the primary casing, for example proximally to the battery management unit 70.

The cell monitoring unit 60 typically communicates with a battery master unit 70 which is also in communication with other cell monitoring units of other primary battery modules of which the battery assembly may form a part (see figure 2), to form a battery management system for a complete battery including multiple chains of primary and multiple secondary battery modules. The battery master unit 70 may typically be located remotely from the primary battery modules, or could be mounted on or fixed to one of the primary battery modules.

As well as reporting the states of the groups of cells in the module to the battery management unit using the measured voltages and temperatures, the cell monitoring unit 60 may be configured to carry out state of charge balancing between the groups of cells, for example by passively using resistive shunt elements to equalise the charged states of the groups of cells in the battery modules, or by more active charge balancing. The cell monitoring unit 60 may be implemented using a conventional cell monitoring unit component such as the Analogue Devices LTC68xx series such as the LTC6811.

In the battery assembly 10 of figure 1, a single cell monitoring unit 60 is provided as part of the primary battery module 20, and no further cell monitoring units are provided as part of any of the secondary battery modules 22 associated with the primary battery module. Instead, the single cell monitoring unit 60 of the primary battery module 20 is arranged to monitor the voltages of all of the groups of battery cells within the primary and secondary battery modules. This is achieved without added complexity or additional wiring by providing an electrical interconnect 80' (stippled in the figure) between the primary battery module 20 and the secondary battery module 22, the electrical interconnect being arranged such that each of the groups of battery cells in the primary battery module is electrically connected in parallel with a corresponding group of battery cells in the secondary battery module. In this way, a voltage of a group of battery cells 30 in the primary battery module detected by the cell monitoring unit 60 is the same as the corresponding voltage of the corresponding group of battery cells in the secondary battery module, and only the voltage of the group in the primary battery module need be directly measured.

If more than one secondary battery module 22 is provided in the battery assembly 10, then a further electrical interconnect 80" having the same properties is used to connect each further secondary battery module to the previous secondary battery module of the chain, such that each group of cells in the previous secondary module is connected in electrical parallel with a corresponding group of cells in the further secondary module of the chain.

In this way, any required number of secondary battery modules 22 can be added to the chain to form the battery assembly 10, so as to increase the current delivery capacity of the assembly 10, without requiring a further cell monitoring unit for each additional battery module, and without requiring a single more complex cell monitoring unit 60 with a larger number of voltage measurement channels. Instead, the cell monitoring unit 60 of the primary battery module 20 is sufficient in the described arrangement to monitor the primary and all of the secondary battery modules of the chain at the same time.

The electrical interconnects 80', 80" can be provided in various ways, for example by coupling each busbar 34, 36, 38 with the corresponding busbar in the next battery module of the chain using a rigid or flexible conductive busbar link. Each such busbar link may be mechanically coupled directly to a corresponding busbar of each of the adjacent battery modules.

A rigid metal busbar link could be provided for example by a metal plate bolted or otherwise fastened to and between the corresponding busbars. A flexible metal busbar link could be provided by a metal wire coupled to and between the corresponding busbars and electrically attached using spade or eyelet terminals.

Whether flexible or rigid, the busbar links may be suitably embedded within a suitable electrical insulator material. The busbar links between one battery module and another could be implemented as a single or multiple, rigid or flexible, integral interconnect units each containing all or a subset of the busbar links, and such interconnect units may also be mechanically coupled to the casings or other parts of each of the associated battery modules to provide additional stability of the electrical connections provided by the electrical interconnects.

Although the single cell monitoring unit 60 of figure 1 is arranged to monitor a voltage of each of the electrically parallel groups of cells across all of the battery modules of the chain through a single electrical connection from the cell monitoring unit to the cell groups within the primary battery module, if temperatures are to be monitored within the one or more secondary battery modules, then an additional temperature detector 64 is required in each additional location 62 in the secondary battery modules. However, if the number of temperature detectors provided in each battery module is small, for example from about one to five, then this places little extra burden on the single cell monitoring unit 60, and can easily be accommodated using suitable electrical connections to the additional temperature detectors 64, which can be low power connections required to carry only low power data signals. In the arrangement of figure 1 an additional temperature detector 64 is provided in an additional location 62 in each of the secondary battery modules of the chain.

Although in principle the electrical interconnects 80' and 80" between corresponding groups of cells in adjacent modules could carry the required electrical power between the battery modules enabling all of the electrical power of the assembly to be delivered using a single pair of electrically opposite power output terminals for the whole assembly, this could require considerably more robust electrical interconnects, reduce reliability especially under conditions of heavy current delivery, and compromise the ability of the cell monitoring unit to accurately detect a voltage for all electrically parallel groups of cells 30 at the same time.

Electrical power output from the battery assembly 10 may therefore be achieved by means of each of the primary and secondary battery modules comprising a pair of electrically opposite power output terminals 82, 84. In the arrangement of figure 1, a first power output terminal 82 is directly electrically connected to, and adjacent to, the first busbar 34 of each battery module, and a second power terminal 84 is directly connected to, and adjacent to, the last busbar of each battery module. The two power output terminals of each battery module are therefore typically disposed at opposite sides of the battery module casing, and at opposite sides of the casing which are perpendicular to the sides of the casing where adjacent modules of the chain are joined both electrically and mechanically as described above.

For reasons which will become apparent in figure 2, the two electrically opposite power output terminals of each battery module may in particular be staggered from each other along the opposite sides of the casing at which they are disposed.

As well as increasing current delivery capacity by adding electrically parallel secondary battery modules in a chain with a primary module as discussed above and shown in figure 1, a battery 5 with higher power output voltage may be required and can readily be achieved by combining two or more additional such battery assemblies in electrical series as illustrated in figure 2, in which some of the figure 1 detail of each battery assembly is omitted for the purposes of clarity.

In particular, figure 2 shows a battery 5 comprising a plurality of battery assemblies 10 of figure 1, wherein the chains of battery modules of each battery assembly 10 disposed adjacent to and/or physically in parallel with each other, and are connected electrically in series with each other so that the groups of battery cells of each battery assembly are connected in electrical series with the groups of battery cells of each of the other battery assemblies.

To avoid excessive power flowing along each chain through the electrical interconnects 80', 80", for each adjacent pair of battery assembly chains a power connector 86 is coupled between (so as to provide a high power connection for the battery current between) a power output terminal of each battery module of a first of the two assemblies and a power output terminal of each battery module of a second of the two assemblies. In this way, the series electrical power connection between adjacent battery assembly chains of battery modules is provided through multiple paths of multiple power connectors.

In particular, in figure 2 it can be seen that a power connector 86 is provided directly between the proximal power output terminals 84, 82 of adjacent primary battery modules, and similarly for each of the secondary battery modules. Moreover, because the power output terminals are staggered with respect to each other along opposite sides of each battery module, adjacent battery assemblies can be brought close together within the battery as whole while still leaving adequate distance between the power output terminals to be connected.

Similarly, a separate power connector 88 is provided directly between the power output terminal 82, 84 of each battery assembly at either end of the series connection of battery assemblies, and respective positive and negative power output rails 89 of the battery 5. A cell monitoring unit 60 is provided as part each primary battery module 20, and each cell monitoring unit 60 is connected to the battery management unit 70.

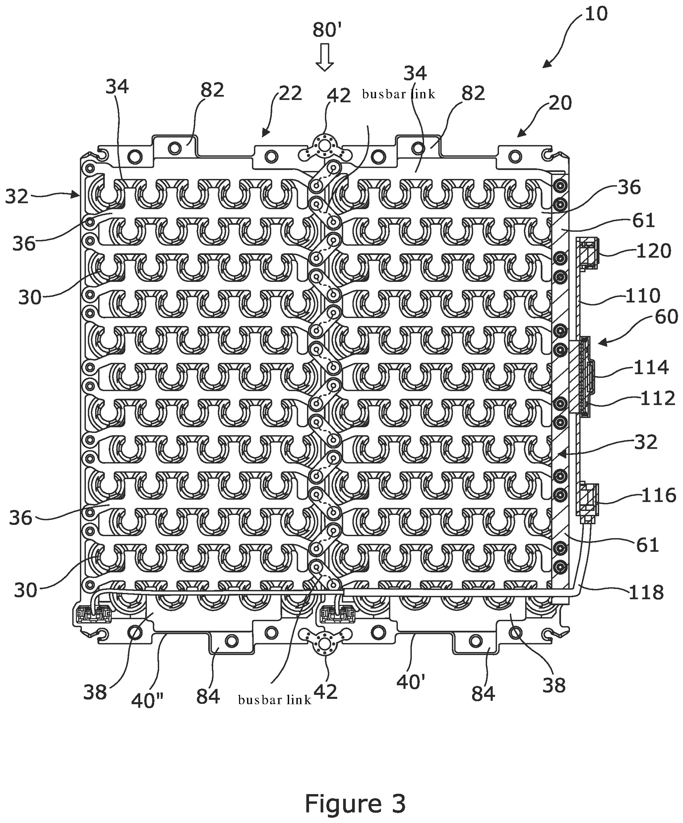

Figures 3, 4 and 5 illustrate in top plan, side elevation, and exploded perspective view respectively, how the embodiment of figures 1 and 2 may be implemented in more detail. In figure 3 the battery assembly 10 can be seen to comprise a primary casing 40' of a primary battery module 20 and a secondary casing 40" of a secondary battery module 22. Each module comprises a large number of battery cells 30 packed in twelve rows of five cells in a hexagonal configuration. From an electrical perspective, each row of five cells forms a group of cells 32 which are electrically connected in parallel with each other, at both positive and negative terminals, which are both connected to electrically at the top of each cell, one terminal (typically positive) being provided by a central cap, and the other (typically negative) being provided by the battery casing or can. This parallel electrical connection is achieved across each group or row of cells using a number of busbars, typically rigid and made of metal. The cell terminals may be welded directly to the busbars.

In particular, each battery module comprises a first busbar 34 which spans across or between and is electrically coupled to the positive terminals of the first row or group of cells, eleven intermediate busbars 36 each of which spans across or between and is electrically coupled to the negative terminals of a first row and the positive terminals of a second adjacent row, and a last busbar 38 which spans across or between and is electrically coupled to the negative terminals of each of the last row of cells. It can be seen that the length of the last busbar can be rather less than the first and intermediate busbars, since reaching the negative can terminals of the first and last of the cells of the row can be achieved with such a reduced length.

Each module also comprises two power output terminals 82, 84 of opposite electrical polarities, for use in delivering the electrical power of the battery module to a load, optionally through series connections with other similar battery modules in order to achieve a higher voltage. The power output terminals are disposed at respective opposite sides of the casing. The first power output terminal 82 is adjacent to, and may be implemented as a continuous part of the first busbar 34, and the second power output terminal 84 is adjacent to, and may be implemented as a continuous part of the second busbar 84. While being disposed at opposite but typically physically parallel sides of the casing, these first and second power output terminals are also disposed staggered with respect to each other along the physically parallel opposite sides so that when multiple such chains of primary and secondary battery modules are disposed physically in parallel to each other, a first power output terminal 82 of one chain is spaced or staggered from a second power output terminal 84 of an adjacent chain, so the two do not butt together and can more easily and flexibly be coupled together using a power connector 86 as illustrated in figure 2.

The primary and secondary casings 40', 40" are each essentially cuboid in form and are typically butted against each other and fixed together using one or more mechanical couplings, in this case using a coupling 42 at each of the two pairs of corners of the two casings. The mechanical coupling shown in figure 3 is in the form of an elongate rod having two side lobes each of which slots down into corresponding slots in the corners of the casings. If four casings abut together, especially if two chains or rows of battery modules are provided in electrical series as shown in figure 2, then the coupling 42 may have four sides lobes in order to couple together all four casings.

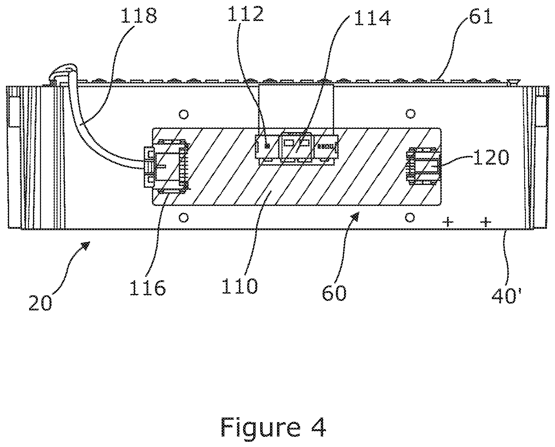

The secondary battery module 22 is essentially the same as the first module 24, except that only the first battery module is provided with a cell monitoring unit 60. In figures 3 and 4 the single cell monitoring unit 60 is fixed to the outside of the side wall of the primary battery module opposite to the side wall against which the secondary battery module abuts, and is electrically connected to each of the groups of cells 32 of the primary battery module for the purposes of sensing a voltage of each of the groups of cells 32 via the busbars 34, 36, 38 using an electrical manifold component 61 spanning across the busbars.

No separate cell monitoring unit 60 is provided at, or for separately measuring voltages of the groups of cells 32 of the secondary battery module. Instead, the each busbar 34, 36, 38 of the primary battery module is connected through the electrical interconnect 80' to a corresponding busbar of the secondary battery module. In this way each of the plurality of groups of battery cells of the first battery module is electrically connected in parallel with a corresponding one of the plurality of groups of battery cells of the second battery module, so that the voltages of the groups of battery cells of the first battery module detected by the cell monitoring unit are also the voltages the corresponding groups of battery cells of the secondary battery module.

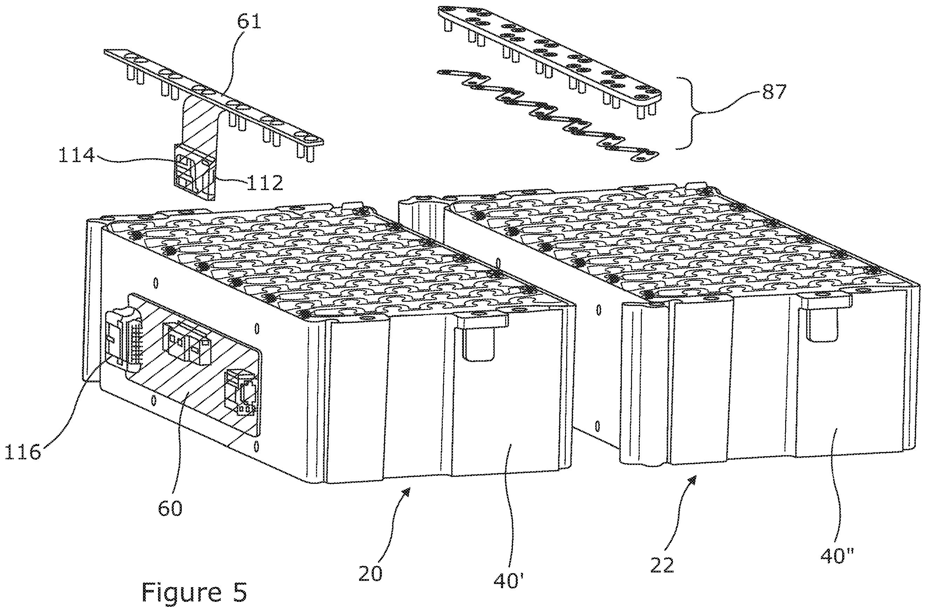

In the arrangement of figure 3 the electrical interconnect 80' is constructed using a separate busbar link spanning between and electrically connected between the pair of corresponding busbars in each battery module. These busbar links may for example be rigid or flexible metal plates screwed, bolted or welded to the respective busbars, although of course various other means could be used to provide equivalent electrical connections. In figure 3 the busbar links are shown as separate elements without any particular supporting structure. In the exploded view of figure 5 it can be seen how the busbar links may be implemented as part of a rigid or flexible integral interconnect units each containing all or a subset of the busbar links, and such interconnect unit 87 which may also be mechanically coupled to the casings or other parts of each of the associated battery modules to provide additional stability of the electrical connections provided by the electrical interconnects.

As seen in figure 5, the cell monitoring unit 60 maybe implemented using a primary circuit board 110 which detachably carries a secondary circuit board 112 which in turn carries the main cell monitoring unit integrated circuit 114. The electrical manifold component 61 then electrically couples the main cell monitoring unit integrated circuit 114 to the busbars for the purposes of voltage monitoring as described above. A first connector 116 on the primary circuit board 110 is then provided for detachable connection of a temperature harness 118 which extends to the temperature detectors 64 (not shown in this figure) located within each battery module. A second connector 120 on the primary circuit board 110 is then provided for detachable connection of a communication connector (not shown) for data exchange with the battery management unit 70 (not shown in this figure), in particular for the cell monitoring unit 60 to provide the monitored voltages and temperatures to the battery management unit, which may then return operational instructions to the cell monitoring unit for example for the purposes of charge balancing.

Although not shown in figures 3 or 5, one or more further secondary battery modules 22 may be added to extend the chain of the primary and secondary battery modules shown in the manner illustrated in figures 1 and 2, using a further electrical interconnect 80" to each subsequent secondary battery module. Multiple such chains of two or more battery modules may then be connected in electrical series using the power output terminals 82, 84, for example as shown in figure 2, in order to provide a battery with increased voltage. Typically such a battery will therefore comprise a rectilinear array of primary and secondary battery modules, with power connectors 86 preferably linking between corresponding battery modules of each chain to avoid excessive power flow along the electrical interconnects 80', 80", and similarly output power connectors 88 linking between each battery module at the ends of the series chain of battery assemblies to output power rails of the battery (see figure 2).

Of course, instead of a battery being formed of such a rectilinear array of primary and secondary battery modules, other physical packing and other interconnect arrangements maybe used. For example, individual or all chains of primary and secondary modules, and/or individual or all series of corresponding modules across multiple chains may be vertically stacked, obliquely or irregularly distributed, packed in configurations to suit a space within which they are located, go around corners, or include gaps or spaces to avoid structures defining the space such as beams or chassis features.

Although specific embodiments of the invention have been described with reference to the drawings, the skilled person will be aware that variations and modifications may be applied to these embodiments without departing from the scope of the invention as defined in the claims.

## Claims

1. A battery assembly (10) comprising a chain of at least a primary battery module (20) and a secondary battery module (22),
the primary battery module (20) comprising a primary casing (40') within which a first plurality of groups (32) of battery cells (36) are housed and electrically connected in series, each group comprising a plurality of battery cells electrically connected in parallel, the primary battery module (20) further comprising a cell monitoring unit (60) arranged to detect a voltage of each of the plurality of groups (36) of battery cells of the primary battery module;
the secondary battery module (22) comprising a secondary casing (40") within which a second plurality of groups (32) of battery cells are housed and electrically connected in series, each group comprising a plurality of battery cells (36) electrically connected in parallel; and
an electrical interconnect (80') between the primary battery module and the secondary battery module, arranged such that each of the first plurality of groups of battery cells is electrically connected in parallel with a corresponding one of the second plurality of groups of battery cells, so that the voltages detected by the cell monitoring unit (60) are also voltages of each of the plurality of groups of battery cells of the secondary battery module.

2. The battery assembly of any preceding claim wherein the chain comprises the primary battery module (20), the secondary battery module (22), and one or more further secondary battery modules (22),
each further secondary battery module (22) also comprising a secondary casing (40") within which a plurality of groups (32) of battery cells are housed and electrically connected in series, each group comprising a plurality of battery cells (36) electrically connected in parallel,
each further secondary battery module (22) being electrically connected to a previous secondary battery module (22) of the chain by a further electrical interconnect (80"), arranged such that each of the plurality of groups of battery cells of the further secondary battery module is electrically connected in parallel with a corresponding one of the plurality of groups of battery cells of the previous secondary battery module, such that the voltages detected by the cell monitoring unit (60) of the primary battery module are also voltages of each of the plurality of groups of battery cells of the further secondary battery module.

3. The battery assembly of claim 1 or 2 wherein the cell monitoring unit (60) is mounted to an exterior or interior of the primary casing.

4. The battery assembly of any preceding claim wherein the casings (40', 40") of the battery modules (20, 22) of the chain are coupled together in series using one or more mechanical couplings (42) between each pair of adjacent casings in the chain, and optionally wherein each of the mechanical couplings (42) slots into and is retained within parallel slots in each of the two adjacent casings it is coupling together.

5. The battery assembly of any preceding claim wherein, in each of the battery modules, the battery cells of each group of cells of are electrically connected in parallel using one or more busbars (34, 36, 38), each busbar spanning across the group of cells, and optionally wherein the cell monitoring unit (60) is electrically connected to the busbars of the primary battery module optionally using an electrical manifold component (61) spanning across the busbars.

6. The battery assembly of claim 5 wherein the electrical interconnect (80', 80") between each pair of adjacent battery modules in the chain comprises a plurality of busbar links, each busbar link being mechanically coupled to a busbar (34, 36, 38) of each the pair of adjacent battery modules (20, 22), and optionally wherein the plurality of busbar links between each pair of adjacent battery modules are comprised within an integral interconnect unit.

7. The battery assembly of any preceding claim wherein each battery module (20, 22) comprises a pair of electrically opposite power terminals (82, 84) and the electrically opposite power terminals are disposed on opposite sides of the casing (40', 40") of the battery module, and optionally wherein the electrically opposite power terminals (82, 84) of each battery module are staggered from each other along the opposite sides of the casing.

8. The battery assembly of any preceding claim wherein each battery module (20, 22) comprises one or more temperature detectors (64), and the cell monitoring unit (60) is electrically connected to the temperature detectors of all of the battery modules so as to monitor temperature in all of the battery modules.

9. A battery (5) comprising a plurality of battery assemblies (10) of any preceding claim, wherein the chains of battery modules (20, 22) of each battery assembly are disposed adjacent to each other, and wherein the groups (32) of battery cells (36) of each battery assembly (10) are connected in electrical series with the groups of battery cells of each of the other battery assemblies.

10. The battery (5) of claim 9 wherein, for each adjacent pair of battery assemblies (10), a power connector (86) is coupled between a power output terminal (82, 84) of each battery module of a first of the pair of battery assemblies and a power output terminal (82, 84) of each corresponding battery module of the second of the pair of battery assemblies, to provide the series electrical connection between the battery assemblies of each pair using multiple power connectors (86).

11. The battery (5) of claim 10 wherein each power output terminal (82, 84) of each battery module (20, 22) is disposed at a side of the casing (40', 40") of the battery module, each power connector connects power output terminals of adjacent sides of the respective casings, and the pair of power output terminals connected by each power connector are staggered with respect to each other along the respective adjacent sides.

12. The battery assembly or battery of any preceding claim wherein each battery module (20, 22) one or more of: comprises from 20 to 200 separate battery cells 36); and has an electrical capacity of from 1 to 20 kWh.

13. A vehicle comprising the battery assembly or battery of any preceding claim, wherein the battery assembly or battery is arranged to provide electrical motive power for the vehicle.

14. A method of managing a battery assembly (10), each battery assembly comprising a chain of a primary battery module (20) housed in a primary casing (40'), and one or more secondary battery modules (22) each housed in a separate secondary casing (40"), each primary and secondary battery module comprising a plurality of groups (32) of battery cells (36) in which the battery cells of each group are electrically connected in parallel, and the groups of battery cells of each battery module are electrically connected in series, the method comprising:
using a cell monitoring unit (60) to monitor voltages of each of the plurality of groups of battery cells of the primary battery module; and
providing an electrical interconnect (80') between the primary battery module and the secondary battery module, arranged such that each of the groups of battery cells of the primary battery module (20) is electrically connected in parallel with a corresponding one of the plurality of groups of battery cells of the secondary battery module (22), such that the monitored voltages of each of the plurality of groups of battery cells of the primary battery module are also voltages of corresponding groups of battery cells of the secondary battery module.

15. The method of claim 14 wherein the cell monitoring unit (60) is located at or fixed to the primary casing, and/or wherein the battery assembly (10) is located within a vehicle, and is used to provide electrical motive power to the vehicle.

## Patentansprüche

1. Batterieanordnung (10), die eine Kette aus mindestens einem Primärbatteriemodul (20) und einem Sekundärbatteriemodul (22) umfasst,
wobei das Primärbatteriemodul (20) ein Primärgehäuse (40') umfasst, in dem eine erste Vielzahl von Gruppen (32) von Batteriezellen (36) untergebracht und elektrisch in Reihe geschaltet ist, wobei jede Gruppe eine Vielzahl elektrisch parallel geschalteter Batteriezellen umfasst, wobei das Primärbatteriemodul (20) weiter eine Zellüberwachungseinheit (60) umfasst, die dazu eingerichtet ist, eine Spannung jeder der Vielzahl von Gruppen (36) von Batteriezellen des Primärbatteriemoduls zu erfassen;
wobei das Sekundärbatteriemodul (22) ein Sekundärgehäuse (40") umfasst, in dem eine zweite Vielzahl von Gruppen (32) von Batteriezellen untergebracht und elektrisch in Reihe geschaltet ist, wobei jede Gruppe eine Vielzahl von parallel geschalteten Batteriezellen (36) umfasst; und
eine elektrische Zusammenschaltung (80') zwischen dem Primärbatteriemodul und dem Sekundärbatteriemodul, die derart eingerichtet ist, dass jede der ersten Vielzahl von Gruppen von Batteriezellen elektrisch parallel mit einer entsprechenden der zweiten Vielzahl von Gruppen von Batteriezellen verbunden ist, sodass die Spannungen, die von der Zellüberwachungseinheit (60) erfasst werden, auch Spannungen jeder der Vielzahl von Gruppen von Batteriezellen des Sekundärbatteriemoduls sind.

2. Batterieanordnung nach einem vorstehenden Anspruch, wobei die Kette das Primärbatteriemodul (20), das Sekundärbatteriemodul (22) und ein oder mehrere weitere Sekundärbatteriemodule (22) umfasst,
jedes weitere Sekundärbatteriemodul (22) außerdem ein Sekundärgehäuse (40"), in dem eine Vielzahl von Gruppen (32) von Batteriezellen untergebracht und elektrisch in Reihe geschaltet ist, umfasst, wobei jede Gruppe eine Vielzahl parallel geschalteter Batteriezellen (36) umfasst,
jedes weitere Sekundärbatteriemodul (22) elektrisch über eine weitere elektrische Zusammenschaltung (80") mit einem vorherigen Sekundärbatteriemodul (22) der Kette verbunden ist, derart eingerichtet, dass jede der Vielzahl von Gruppen von Batteriezellen des weiteren Sekundärbatteriemoduls parallel zu einer entsprechenden der Vielzahl von Gruppen von Batteriezellen des vorherigen Sekundärbatteriemoduls geschaltet ist, sodass die Spannungen, die von der Zellüberwachungseinheit (60) des Primärbatteriemoduls erfasst werden, auch Spannungen jeder der Vielzahl von Gruppen von Batteriezellen des weiteren Sekundärbatteriemoduls sind.

3. Batterieanordnung nach Anspruch 1 oder 2, wobei die Zellüberwachungseinheit (60) an einer Außenseite oder Innenseite des Primärgehäuses installiert ist.

4. Batterieanordnung nach einem vorstehenden Anspruch, wobei die Gehäuse (40', 40") der Batteriemodule (20, 22) der Kette mittels einer oder mehrerer mechanischer Kopplungen (42) zwischen jedem Paar angrenzender Gehäuse in der Kette in Reihe geschaltet sind, und wobei jede der mechanischen Kopplungen (42) optional in parallele Schlitze in jedem der beiden angrenzenden Gehäuse, die sie aneinander koppeln, einrastet und darin gehalten wird.

5. Batterieanordnung nach einem vorstehenden Anspruch, wobei in jedem der Batteriemodule die Batteriezellen jeder Gruppe von Zellen elektrisch parallel unter Verwendung einer oder mehrerer Sammelschienen (34, 36, 38) geschaltet sind, wobei sich jede Sammelschiene über die gesamte Gruppe von Zellen erstreckt, und wobei die Zellüberwachungseinheit (60) optional elektrisch mit den Sammelschienen des Primärbatteriemoduls verbunden ist, indem optional eine elektrische Verteilerkomponente (61), die sich über die Sammelschienen erstreckt, verbunden ist.

6. Batterieanordnung nach Anspruch 5, wobei die elektrische Zusammenschaltung (80', 80") zwischen jedem Paar aus aneinandergrenzenden Batteriemodulen in der Kette eine Vielzahl von Stromschienengliedern umfasst, wobei jedes Stromschienenglied mechanisch an eine Stromschiene (34, 36, 38) jedes Paares benachbarter Batteriemodule (20, 22) gekoppelt ist, und wobei die Vielzahl von Stromschienengliedern optional zwischen jedem Paar aus angrenzenden Batteriemodulen in einer integrierten Zusammenschaltungseinheit enthalten ist.

7. Batterieanordnung nach einem vorstehenden Anspruch, wobei jedes Batteriemodul (20, 22) ein Paar elektrisch entgegengesetzter Leistungsanschlüsse (82, 84) umfasst und die elektrisch entgegengesetzten Leistungsanschlüsse an entgegengesetzten Seiten des Gehäuses (40', 40") des Batteriemoduls angeordnet sind, und wobei die elektrisch entgegengesetzten Leistungsanschlüsse (82, 84) jedes Batteriemoduls optional entlang der entgegengesetzten Seiten des Gehäuses versetzt angeordnet sind.

8. Batterieanordnung nach einem vorstehenden Anspruch, wobei jedes Batteriemodul (20, 22) einen oder mehrere Temperaturdetektoren (64) umfasst und die Zellüberwachungseinheit (60) elektrisch mit den Temperaturdetektoren aller Batteriemodule verbunden ist, um die Temperatur in allen Batteriemodulen zu überwachen.

9. Batterie (5), die eine Vielzahl von Batterieanordnungen (10) nach einem vorstehenden Anspruch umfasst, wobei die Ketten von Batteriemodulen (20, 22) jeder Batterieanordnung aneinandergrenzend angeordnet sind, und wobei die Gruppen (32) von Batteriezellen (36) jeder Batterieanordnung (10) elektrisch mit den Gruppen von Batteriezellen jeder der anderen Batterieanordnungen in Reihe geschaltet sind.

10. Batterie (5) nach Anspruch 9, wobei für jedes angrenzende Paar von Batterieanordnungen (10) ein Leistungsverbinder (86) zwischen einem Leistungsausgangsanschluss (82, 84) jedes Batteriemoduls eines ersten Paares von Batterieanordnungen und einem Leistungsausgangsanschluss (82, 84) jedes entsprechenden Batteriemoduls des zweiten Paares von Batterieanordnungen gekoppelt ist, um die elektrische Reihenschaltung zwischen den Batterieanordnungen jedes Paares unter Verwendung mehrerer Leistungsverbinder (86) bereitzustellen.

11. Batterie (5) nach Anspruch 10, wobei jeder Leistungsausgangsanschluss (82, 84) jedes Batteriemoduls (20, 22) an einer Seite des Gehäuses (40', 40") des Batteriemoduls angeordnet ist, jeder Leistungsverbinder Leistungsausgangsanschlüsse angrenzender Seiten der jeweiligen Gehäuse verbindet, und das Paar von Leistungsausgangsanschlüssen, das von jedem Leistungsverbinder verbunden ist, in Bezug zueinander entlang der jeweiligen angrenzenden Seiten versetzt angeordnet ist.

12. Batterieanordnung oder Batterie nach einem vorstehenden Anspruch, wobei jedes Batteriemodul (20, 22) eines oder mehrere umfasst von: 20 bis 200 separaten Batteriezellen (36); und eine elektrische Kapazität von 1 bis 20 kWh aufweist.

13. Fahrzeug, das die Batterieanordnung oder Batterie nach einem vorstehenden Anspruch umfasst, wobei die Batterieanordnung oder Batterie dazu eingerichtet ist, elektrische Antriebsleistung für das Fahrzeug bereitzustellen.

14. Verfahren zum Verwalten einer Batterieanordnung (10), wobei jede Batterieanordnung eine Kette aus einem Primärbatteriemodul (20), das in einem Primärgehäuse (40') untergebracht ist, und einem oder mehreren Sekundärbatteriemodulen (22), die jeweils in einem separaten Sekundärgehäuse (40") untergebracht sind, umfasst, wobei jedes Primär- und Sekundärbatteriemodul eine Vielzahl von Gruppen (32) von Batteriezellen (36) umfasst, in denen die Batteriezellen jeder Gruppe elektrisch parallel geschaltet sind, und die Gruppen von Batteriezellen jedes Batteriemoduls elektrisch in Reihe geschaltet sind, wobei das Verfahren Folgendes umfasst:
Verwenden einer Zellüberwachungseinheit (60) zum Überwachen von Spannungen jeder der Vielzahl von Gruppen von Batteriezellen des Primärbatteriemoduls; und
Bereitstellen einer elektrischen Zusammenschaltung (80') zwischen dem Primärbatteriemodul und dem Sekundärbatteriemodul, die derart eingerichtet ist, dass jede der Gruppen von Batteriezellen des Primärbatteriemoduls (20) elektrisch parallel mit einer entsprechenden Gruppe der Vielzahl von Gruppen von Batteriezellen des Sekundärbatteriemoduls (22) geschaltet ist, sodass die überwachten Spannungen jeder der Vielzahl von Gruppen von Batteriezellen des Primärbatteriemoduls auch Spannungen entsprechender Gruppen von Batteriezellen des Sekundärbatteriemoduls sind.

15. Verfahren nach Anspruch 14, wobei die Zellüberwachungseinheit (60) an dem Primärgehäuse liegt oder befestigt ist, und/oder wobei sich die Batterieanordnung (10) innerhalb eines Fahrzeugs befindet und dazu verwendet wird, dem Fahrzeug elektrische Antriebsleistung bereitzustellen.

## Revendications

1. Ensemble batterie (10) comprenant une chaîne d'au moins un module de batterie primaire (20) et un module de batterie secondaire (22),
le module de batterie primaire (20) comprenant un boîtier primaire (40') dans lequel une première pluralité de groupes (32) d'éléments de batterie (36) sont logés et connectés électriquement en série, chaque groupe comprenant une pluralité d'éléments de batterie connectés électriquement en parallèle, le module de batterie primaire (20) comprenant en outre une unité de surveillance d'éléments (60) agencée pour détecter une tension de chacun de la pluralité de groupes d'éléments de batterie (36) du module de batterie primaire ;
le module de batterie secondaire (22) comprenant un boîtier secondaire (40") dans lequel une seconde pluralité de groupes (32) d'éléments de batterie sont logés et connectés électriquement en série, chaque groupe comprenant une pluralité d'éléments de batterie (36) connectés électriquement en parallèle ; et
une interconnexion électrique (80') entre le module de batterie primaire et le module de batterie secondaire, agencée de telle sorte que chacun de la première pluralité de groupes d'éléments de batterie soit connecté électriquement en parallèle avec un correspondant de la seconde pluralité de groupes d'éléments de batterie, de façon à ce que les tensions détectées par l'unité de surveillance d'éléments (60) soient également les tensions de chacun de la pluralité de groupes d'éléments de batterie du module de batterie secondaire.

2. Ensemble batterie selon une quelconque revendication précédente, dans lequel la chaîne comprend le module de batterie primaire (20), le module de batterie secondaire (22) et un ou plusieurs autres modules de batterie secondaires (22),
chaque autre module de batterie secondaire (22) comprenant également un boîtier secondaire (40") dans lequel une pluralité de groupes (32) d'éléments de batterie sont logés et connectés électriquement en série, chaque groupe comprenant une pluralité d'éléments de batterie (36) connectés électriquement en parallèle,
chaque autre module de batterie secondaire (22) étant connecté électriquement à un module de batterie secondaire précédent (22) de la chaîne par une autre interconnexion électrique (80"), agencée de telle sorte que chacun de la pluralité de groupes d'éléments de batterie de l'autre module de batterie secondaire soit connecté électriquement en parallèle avec un correspondant de la pluralité de groupes d'éléments de batterie du module de batterie secondaire précédent, de telle sorte que les tensions détectées par l'unité de surveillance d'éléments (60) du module de batterie primaire soient également les tensions de chacun de la pluralité de groupes d'éléments de batterie de l'autre module de batterie secondaire.

3. Ensemble batterie selon la revendication 1 ou 2, dans lequel l'unité de surveillance d'éléments (60) est montée à l'extérieur ou à l'intérieur du boîtier primaire.

4. Ensemble batterie selon une quelconque revendication précédente, dans lequel les boîtiers (40', 40") des modules de batterie (20, 22) de la chaîne sont accouplés ensemble en série à l'aide d'un ou plusieurs accouplements mécaniques (42) entre chaque paire de boîtiers adjacents dans la chaîne, et optionnellement dans lequel chacun des accouplements mécaniques (42) s'insère et est retenu dans des fentes parallèles dans chacun des deux boîtiers adjacents qu'il accouple ensemble.

5. Ensemble batterie selon une quelconque revendication précédente, dans lequel, dans chacun des modules de batterie, les éléments de batterie de chaque groupe d'éléments sont connectés électriquement en parallèle à l'aide d'une ou plusieurs barres omnibus (34, 36, 38), chaque barre omnibus s'étendant sur le groupe d'éléments, et optionnellement dans lequel l'unité de surveillance d'éléments (60) est connectée électriquement aux barres omnibus du module de batterie primaire optionnellement à l'aide d'un composant collecteur électrique (61) s'étendant sur les barres omnibus.

6. Ensemble batterie selon la revendication 5, dans lequel l'interconnexion électrique (80', 80") entre chaque paire de modules de batterie adjacents dans la chaîne comprend une pluralité de liaisons de barre omnibus, chaque liaison de barre omnibus étant accouplée mécaniquement à une barre omnibus (34, 36, 38) de chaque paire de modules de batterie adjacents (20, 22), et optionnellement dans lequel la pluralité de liaisons de barre omnibus entre chaque paire de modules de batterie adjacents sont comprises dans une unité d'interconnexion intégrée.

7. Ensemble batterie selon une quelconque revendication précédente, dans lequel chaque module de batterie (20, 22) comprend une paire de bornes d'alimentation électriquement opposées (82, 84) et les bornes d'alimentation électriquement opposées sont disposées sur des côtés opposés du boîtier (40', 40") du module de batterie, et optionnellement dans lequel les bornes d'alimentation électriquement opposées (82, 84) de chaque module de batterie sont disposées en quinconce l'une par rapport à l'autre le long des côtés opposés du boîtier.

8. Ensemble batterie selon une quelconque revendication précédente, dans lequel chaque module de batterie (20, 22) comprend un ou plusieurs détecteurs de température (64), et l'unité de surveillance d'éléments (60) est connectée électriquement aux détecteurs de température de tous les modules de batterie de manière à surveiller la température dans tous les modules de batterie.

9. Batterie (5) comprenant une pluralité d'ensembles batteries (10) selon une quelconque revendication précédente, dans laquelle les chaînes de modules de batterie (20, 22) de chaque ensemble batterie sont disposées adjacentes les unes aux autres, et dans laquelle les groupes (32) d'éléments de batterie (36) de chaque ensemble batterie (10) sont connectés en série électrique avec les groupes d'éléments de batterie de chacun des autres ensembles batteries.

10. Batterie (5) selon la revendication 9, dans laquelle, pour chaque paire adjacente d'ensembles batteries (10), un connecteur d'alimentation (86) est couplé entre une borne de sortie de puissance (82, 84) de chaque module de batterie d'un premier de la paire d'ensembles batteries et une borne de sortie de puissance (82, 84) de chaque module de batterie correspondant du second de la paire d'ensembles batteries, afin de fournir la connexion électrique en série entre les ensembles batteries de chaque paire à l'aide de plusieurs connecteurs d'alimentation (86).

11. Batterie (5) selon la revendication 10, dans laquelle chaque borne de sortie de puissance (82, 84) de chaque module de batterie (20, 22) est disposée sur un côté du boîtier (40', 40") du module de batterie, chaque connecteur d'alimentation connecte les bornes de sortie de puissance des côtés adjacents des boîtiers respectifs, et la paire de bornes de sortie de puissance connectées par chaque connecteur d'alimentation sont disposées en quinconce l'une par rapport à l'autre le long des côtés adjacents respectifs.

12. Ensemble batterie ou batterie selon une quelconque revendication précédente, dans lequel chaque module de batterie (20, 22) : comprend de 20 à 200 éléments de batterie distincts (36) ; et/ou présente une capacité électrique de 1 à 20 kWh.

13. Véhicule comprenant l'ensemble batterie ou la batterie selon une quelconque revendication précédente, dans lequel l'ensemble batterie ou la batterie sont agencés pour fournir de la puissance motrice électrique au véhicule.

14. Procédé de gestion d'un ensemble batterie (10), chaque ensemble batterie comprenant une chaîne d'un module de batterie primaire (20) logé dans un boîtier primaire (40'), et un ou plusieurs modules de batterie secondaires (22) logés chacun dans un boîtier secondaire distinct (40''), chaque module de batterie primaire et secondaire comprenant une pluralité de groupes (32) d'éléments de batterie (36) dans lesquels les éléments de batterie de chaque groupe sont connectés électriquement en parallèle, et les groupes d'éléments de batterie de chaque module de batterie sont connectés électriquement en série, le procédé comprenant :
l'utilisation d'une unité de surveillance d'éléments (60) pour surveiller les tensions de chacun de la pluralité de groupes d'éléments de batterie du module de batterie primaire ; et
la fourniture d'une interconnexion électrique (80') entre le module de batterie primaire et le module de batterie secondaire, agencée de telle sorte que chacun des groupes d'éléments de batterie du module de batterie primaire (20) soit connecté électriquement en parallèle avec un correspondant de la pluralité de groupes d'éléments de batterie du module de batterie secondaire (22), de telle sorte que les tensions surveillées de chacun de la pluralité de groupes d'éléments de batterie du module de batterie primaire soient également les tensions de groupes correspondants d'éléments de batterie du module de batterie secondaire.

15. Procédé selon la revendication 14, dans lequel l'unité de surveillance d'éléments (60) est située au niveau du ou fixée au boîtier primaire, et/ou dans lequel l'ensemble batterie (10) est situé à l'intérieur d'un véhicule et est utilisé pour fournir de la puissance motrice électrique au véhicule.
